(19) Europäisches Patentamt
European Patent Office
Office européen des brevets

(11) **EP 1 746 718 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(51) Int Cl.:
*H02P 21/14* ^(2006.01)    *H02P 25/08* ^(2006.01)

(21) Anmeldenummer: **06014810.3**

(22) Anmeldetag: **17.07.2006**

(54) **Verfahren zur direkten Regelung der Reaktanz einer Drehstrommaschine**

Method for directly controlling the reactance of a revolving field machine

Procédé pour contrôler directement la réactance d'une machine à champ tournant

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.07.2005 AT 12392005**

(43) Veröffentlichungstag der Anmeldung:
**24.01.2007 Patentblatt 2007/04**

(73) Patentinhaber: **Schrödl, Manfred**
**7223 Sieggraben (AT)**

(72) Erfinder: **Kalteis, Gerald**
**3270 Scheibbs (AT)**

(74) Vertreter: **Krause, Peter**
**Sagerbachgasse 7**
**2500 Baden (AT)**

(56) Entgegenhaltungen:
**US-A- 5 786 681          US-A- 5 982 117**

• **TURSINI, M.; PETRELLA, R.; PARASILITI, F.: "Initial rotor position estimation method for PM motors" IEEE TRANSACTION ON INDUSTRY APPLICATIONS, Bd. 39, Nr. 6, November 2003 (2003-11), Seiten 1630-1640, XP002406905**
• **ROBEISCHL, E.; SCHROEDL, M.; KRAMMER, M.: "Position-sensorless biaxial position control with industrial PM motor drives based on INFORM- and back EMF model" IECON 02, Bd. 1, November 2002 (2002-11), Seiten 668-673, XP002406906**

**Beschreibung**

Die Erfindung betrifft ein Verfahren zur sensorlosen Regelung einer Drehstrommaschine.

Zur hochwertigen Regelung von Drehstrommaschinen werden feldorientierte Regelverfahren angewendet, die unter Erfassung des magnetischen Flusses eine entkoppelte Drehmomenten- und Flussverkettungsführung ermöglichen (Blaschke 1972). Bei Drehstrommaschinen nach dem Prinzip der Synchronmaschine, entweder durch Dauermagnete oder durch eine eigene Erregerwicklung, wird über den Statorstrom dabei hauptsächlich die Aufgabe der Drehmomentführung vom Statorstrom übernommen, die Bereitstellung der Flussverkettung stellt dabei meist eine sekundäre Aufgabe dar, die primär von den Dauermagneten oder der Erregerwicklung vorgenommen wird. Bei Drehstrommaschinen nach dem Prinzip der Asynchronmaschine und der Reluktanzmaschine übernimmt der Statorstrom beide Aufgaben.

Der Nachteil dieser Verfahren ist, dass zur hochwertigen Flussbestimmung entweder ein mechanischer Geber oder ein hochwertiges Maschinenmodell nötig ist, der bzw. das die Flussposition, die bei synchron laufenden Maschinen mit der Rotorposition in engem Zusammenhang steht, ermittelt.

Der Nachteil des mechanischen Gebers ist, dass die Robustheit des Antriebs reduziert wird und gleichzeitig sowohl Volumen als auch zusätzliche Kosten benötigt.

Der Nachteil des hochwertigen Maschinenmodells ist, dass dieses entweder nur ab einer gewissen Mindestdrehzahl funktioniert, wenn es auf Basis der induzierten Spannung arbeitet oder nur eine begrenzte Momentenüberlastung zulässt, wenn es auf Reaktanzmessungen basiert.

Aus der Veröffentlichung von Tursini, M. et al: "Initial rotor position estimation method for PM motors" in IEEE Transaction on Industry Applications, Bd. 39, Nr. 6, Nov. 2003 (2003-11), Seiten 1630-1640, ISSN 0093-0094 ist ein Verfahren zur Regelung der Reaktanz einer Drehstrommaschine bekannt. Dieses Verfahren funktioniert nur im Stillstand. Dies ergibt sich zwingend daraus, dass die Ströme des Messmusters zu Beginn und am Ende Null sein müssen, das Messmuster sehr lange dauert und das Messmuster von der EMK stark gestört wird, so dass bei Drehung der Maschine ein von der EMK dominiertes Signal gemessen würde.

Weiters ist aus der Veröffentlichung IECON 02; Bd. 1 November 2002 (2002-11) Seiten 668-673, XP002406906 "Position-sensorless biaxial position control with industrial PM motor drives based on INFORM- and back EMF model" von Robeischl, Schrödl, Krammer ein Verfahren zur Feldorientierung von Drehstrommaschinen bekannt, welches explizit eine Stromführung auf Basis eines zu ermittelnden Rotorwinkels angibt.

In der US 5 982 117 A ist ein so genannter "Switched reluctance motor" beschrieben, welcher keine Drehstrommaschine ist. Ebenso bezieht sich das Verfahren nach der US 5 786 681 ausschließlich auf einen "Switched reluctance motor".

Aufgabe der Erfindung ist es, ein Verfahren der eingangs genannten Art zu schaffen, das einerseits die oben angeführten Nachteile vermeidet und das anderseits eine hochwertige, sensorlose Regelung auch bei einer im Sättigungsbereich befindlichen Drehstrommaschine in der Ausführung als Synchron-, Asynchron- oder Reluktanzmaschine gewährleistet.

Die Aufgabe wird durch die Merkmale des Anspruchs 1 gelöst.

Das erfindungsgemäße Verfahren ist gekennzeichnet durch folgende Schritte:

- Off-line Festlegung diskreter Winkellagen für den Soll-Stromraumzeiger in denen er weitergeschaltet wird,
- Off-line Feststellung der Stromanstiege bezogen auf die jeweils angelegte Spannung in den diskreten Winkellagen, wobei diese als Kriterium für die Weiterschaltung des Soll-Stromraumzeigers verwendet werden, Ermittlung der Stromanstiege während des Betriebes bei Anlegen unterschiedlicher Spannungs-Raumzeiger unter Kompensation der EMK,
- Festlegung des Winkels des Soll-Stromraumzeigers im statorfesten Koordinatensystem und
- Weiterschalten des Soll-Stromraumzeigers unter Heranziehung der EMKbereinigten Stromanstiege.

Mit der Erfindung ist erstmals eine hochwertige, sensorlose Regelung auch im Sättigungsbereich möglich, da es die Auswirkungen des Statorstromraumzeigers auf die Strangreaktanzen zur direkten Führung der Strangreaktanzen und damit indirekt zur Führung von Drehmoment und gegebenenfalls Flussverkettung verwendet. Dieses Verfahren dient zur direkten Regelung der Reaktanz einer Drehstrommaschine, wobei die Führung des, vorzugsweise auf diskrete Winkellagen eingeschränkten, Soll-Stromraumzeigers in der Drehstrommaschine auf Basis von mindestens einer EMK-kompensierenden Strangstromanstiegsmessung zur Bestimmung einer charakteristischen Stranginduktivität beruht. Die gemessene Stranginduktivität L hängt vom aktuellen Ist-Stromraumzeiger als bekannten Parameter und von der Flussverkettung als zumindest in seiner Winkellage unbekannten Systemzustand ab.

Nach einem besonderen Merkmal der Erfindung wird bei einer synchron laufenden, vorzugsweise permanentmagneterregten, Drehstrommaschine der Soll-Stromraumzeiger bei Durchschreiten eines Stranginduktivitätswertes auf seinen in Drehrichtung gesehen nächsten, vorzugsweise auf diskrete Winkellagen eingeschränkten, Sollwinkel weitergeschaltet. Damit kann auf die explizite Bestimmung der Rotorposition verzichtet werden. Der Winkel an sich ist nicht mehr nötig, sondern es wird bei Durchschreiten eines bestimmten Induktivitätswertes weitergeschaltet. Der Induktivitätswert kann in einfachster Weise aus den Stromanstiegen bestimmt werden.

Gemäß einem weiteren Merkmal der Erfindung stimmt die Raumrichtung des zur Stranginduktivitätsmessung herangezogenen Stranges mit der Richtung des aktuellen Sollstromraumzeigers annähernd, vorzugsweise in einer 30-Grad-Umgebung befindend, überein. Dadurch ist eine hohe Trennschärfe bzw. eine hohe Auflösungsgenauigkeit des zu prüfenden Kriteriums gewährleistet, wobei das zu prüfende Kriterium das Durchschreiten eines vorgegebenen Induktivitätswertes ist.

Nach einem weiteren besonderen Merkmal der Erfindung wird unter Verwendung des für die dreisträngige synchron laufende, vorzugsweise permanentmagneterregte, Drehstrommaschine off-line ermittelbaren Zusammenhanges

$$\begin{pmatrix} L1 \\ L2 \\ L3 \end{pmatrix} = \begin{pmatrix} f[\underline{i}, \arg(\underline{\psi}_M)] \\ f[\underline{i} \cdot \exp(-j120°), \arg(\underline{\psi}_M) - 120°] \\ f[\underline{i} \cdot \exp(+j120°), \arg(\underline{\psi}_M) + 120°] \end{pmatrix}$$

bei bekanntem Stromraumzeiger $\underline{i}$ unter Verwendung der off-line ermittelbaren Funktion f bei mindestens einem on-line vorliegenden Messwert Lk, k=1,2,3 unter Verwendung bekannter Methoden der Mathematik der gemäß einem Gütekriterium optimale Wert $\arg(\underline{\psi}_M)$ ermittelt, der der Rotorlage der synchron laufenden Maschine bestmöglich entspricht, wobei unter $\underline{\psi}_M$ der von der Erregung, vorzugsweise durch Dauermagnete, hervorgerufene und mit dem Stator verkettete Fluss der synchron laufenden Maschine verstanden wird.

Wie bereits erwähnt sind L1, L2 und L3 charakteristische Induktivitätswerte der Stränge 1, 2 und 3, die jeweils um 120° versetzt sind. Bei Asynchronmaschinen und Synchronmaschinen mit Dämpfer werden als charakteristische Induktivitätswerte Werte der Streuinduktivität herangezogen. Bei sonstigen synchron laufenden Maschinen wird die Hauptinduktivität als Kriterium genommen.

$\underline{i}$ ist der Stromraumzeiger in einem statorfesten Koordinatensystem.

$\underline{\psi}_M$ ist der Winkel des vom Rotor hervorgerufenen Flussverkettungsraumzeigers.

Der Vorteil liegt darin: wenn der Winkel von weiterem Interesse sein sollte, beispielsweise zur Ermittlung einer Winkelgeschwindigkeit, so kann dieser aus diesem mathematischen Zusammenhang herausgerechnet werden.

Nach einer weiteren besonderen Ausgestaltung der Erfindung wird unter Verwendung des für die dreisträngige Reluktanzmaschine off-line ermittelbaren Zusammenhanges

$$\begin{pmatrix} L1 \\ L2 \\ L3 \end{pmatrix} = \begin{pmatrix} f[\underline{i}, \gamma] \\ f[\underline{i} \cdot \exp(-j120°), \gamma - 120°] \\ f[\underline{i} \cdot \exp(+j120°), \gamma + 120°] \end{pmatrix}$$

bei bekanntem Stromraumzeiger $\underline{i}$ unter Verwendung der off-line ermittelbaren Funktion f bei mindestens einem on-line vorliegenden Messwert Lk, k=1,2,3 unter Verwendung bekannter Methoden der Mathematik der gemäß einem Gütekriterium optimale Wert $\gamma$ ermittelt, der der Rotorlage der Reluktanzmaschine bestmöglich entspricht, wobei unter $\gamma$ die Rotorlage der Reluktanzmaschine verstanden wird. Damit ist auch bei Reluktanzmaschinen im hohen Sättigungszustand eine sehr genaue Ermittlung der Rotorposition ohne Lagegeber möglich.

Gemäß einer Weiterbildung der Erfindung wird bei Strangzahlen ungleich drei die (obige) Gleichung gemäß Anspruch 4 nach bekannten Methoden der komplexen Rechnung an die entsprechende Strangzahl angepasst. Dadurch kann das erfindungsgemäße Verfahren auch auf beispielsweise zwei- oder fünf-phasige Maschinen angewendet werden.

Nach einer weiteren Ausgestaltung der Erfindung wird bei nicht gleichartig aufgebauten Wicklungen die Funktion f durch n off-line ermittelbare Funktionen fn, wobei n höchstens der Strangzahl der Maschine entspricht, ersetzt und daraus die Rotorposition nach bekannten Methoden der komplexen Rechnung ermittelt.

Damit kann das erfindungsgemäße Verfahren auch auf Maschinen mit ungleich gebauten Wicklungen, beispielsweise Maschinen mit ungleicher Windungszahl, eingesetzt werden.

Gemäß einer weiteren besonderen Ausgestaltung der Erfindung wird anstelle der Stranginduktivität L der zur Stranginduktivität L verkehrt proportionale EMK-bereinigte Strangstromanstieg verwendet. Dadurch kann auf numerisch aufwendige Inversionen von Zahlenbildungen verzichtet werden.

Nach einem besonderen Merkmal der Erfindung wird im motorischen Betrieb bei Unterschreiten eines Grenzwertes der erfassten Stranginduktivität L der Stromraumzeiger um einen in Drehrichtung positiven, vorzugsweise konstanten, Winkel weitergedreht. Dadurch wird im motorischen Betrieb ein sicheres Weiterschalten gewährleistet.

Gemäß einer alternativen Ausgestaltung der Erfindung wird im generatorischem Betrieb bei Überschreiten eines Grenzwertes der erfassten Stranginduktivität L der Stromraumzeiger um einen in Drehrichtung positiven, vorzugsweise konstanten, Winkel weitergedreht. Auch im generatorischem Betrieb ist ein sicheres Weiterschalten gewährleistet.

Nach einem weiteren besonderem Merkmal der Erfindung wird unter Verwendung des für die dreisträngige Drehstrom-Asynchronmaschine off-line ermittelbaren Zusammenhanges

$$\begin{pmatrix} L1 \\ L2 \\ L3 \end{pmatrix} = \begin{pmatrix} f[\underline{i}, \arg(\underline{\psi}_R), |\underline{\psi}_R|] \\ f[\underline{i} \cdot \exp(-j120°), \arg(\underline{\psi}_R) - 120°, |\underline{\psi}_R|] \\ f[\underline{i} \cdot \exp(+j120°), \arg(\underline{\psi}_R) + 120°, |\underline{\psi}_R|] \end{pmatrix}$$

bei bekanntem Stromraumzeiger i unter Verwendung der off-line ermittelbaren Funktion f bei mindestens zwei on-line vorliegenden Messwerten Lk, Lj; k=1,2,3, j=1,2,3, j≠k unter Verwendung bekannter Methoden der Mathematik das gemäß einem Gütekriterium optimale Wertepaar {arg($\psi_R$), |$\psi_R$|} zur Beschreibung des Flusswinkels und des Flussniveaus in der Maschine ermittelt, wobei unter $\psi_R$ vorzugsweise die Rotorflussverkettung verstanden wird. Mit diesem mathematischen Zusammenhang kann ein Näherungswert für den momentanen Rotorflussbetrag bzw. dem momentanen Rotorflusswinkel ermittelt werden, welcher die Basis für eine hochwertige Regelung darstellt.

Gemäß einer Weiterbildung der Erfindung wird bei Asynchronmaschinen die Stromraumzeigerführung so durchgeführt, dass die rotorflussparallele Komponente des Stromraumzeigers vom Flussbetrag |$\psi_R$| und die rotorflussnormale Komponente des Stromraumzeigers vom geforderten Drehmoment abgeleitet wird. Vorteilhaft dabei ist, dass dadurch eine getrennte Führung des Magnetisierungsniveaus als auch des Drehmomentes der Asynchronmaschine gewährleistet wird.

Nach einer besonderen Ausgestaltung der Erfindung ist die elektrische Maschine als Linearmaschine ausgeführt. Damit werden wirtschaftliche Lösungen für lineare Bewegungen erreicht.

Gemäß einer alternativen Ausgestaltung der Erfindung ist die elektrische Maschine als rotierende Maschine ausgeführt. Damit werden wirtschaftliche Lösungen für rotierende Antriebe erreicht.

Nach einem weiteren Merkmal der Erfindung werden die Stromanstiegsmessungen zur Bestimmung von Induktivitätsparametern aus Strommesselementen, die zwischen dem Phasenabgang der Wechselrichterbrückenzweige und dem Zwischenkreiskondensator angeordnet sind, gewonnen. Der Vorteil dieser Ausgestaltung liegt darin, dass dadurch kostengünstige und damit wirtschaftliche Strommessungen ermöglicht werden.

Gemäß einer Weiterbildung der Erfindung werden die Stromanstiegsmessungen zur Bestimmung von Induktivitätsparametern aus Strommesselementen, die zwischen dem Phasenabgang der Wechselrichterbrückenzweige und dem Maschinenanschluss angeordnet sind, gewonnen. Damit können dem heutigen Stand der Technik entsprechende potentialtrennende Sensoren eingesetzt werden, wodurch sicherheitstechnische Aspekte abgedeckt werden.

Nach einem weiteren besonderen Merkmal der Erfindung führen bei dreiphasigen Wechselrichtern in gewisser zeitlicher Abfolge nur zwei Brückenzweige Strom und der dritte ist gesperrt. Im so genannten "bürstenlosen Gleichstrommotorbetrieb" wird dadurch eine diskretisierte Stromraumzeigerstellung automatisch zur Verfügung gestellt.

Nachstehend wird die Erfindung noch eingehender erläutert.

Bei der Durchführung der Reaktanzregelung ist der Ausgangspunkt ein Betriebspunkt der Maschine, der durch einen eingeprägten Stromraumzeiger (nach Betrag und Richtung bekannt), vorzugsweise in einer von einer beschränkten Anzahl ausgewählter Raumrichtungen, wie beispielsweise die Richtungen gamma-i=k.60Grad oder gamma-i=k.30Grad gekennzeichnet ist. Weiters ist der Betriebspunkt gekennzeichnet durch einen unbekannten Flussraumzeiger, der im Falle einer Asynchronmaschine nach Betrag und Winkel unbekannt bzw. bei Synchronmaschinen im Betrag bekannt und im Winkel unbekannt ist.

Aus der Messung der Stranginduktivitäten mittels EMK-kompensierender Kombination von mindestens 2 Testspannungsraumzeigern, in Anlehnung an die Regelung gemäß der AT406.722 , können bei einer dreisträngigen Maschine mindestens eine und höchstens 3 Stranginduktivitäten L oder deren Kehrwerte, gegebenenfalls mit einem Faktor multipliziert (dies entspricht beispielsweise dem EMK-kompensierten Strangstromanstieg di/dt), ermittelt werden.

Der Stranginduktivitätsverlauf hat ein Minimum oder zwei relativ nahe beisammen liegende Minima mit einem schwach ausgeprägten Sattel dazwischen, der vom Statorstromraumzeiger als bekannten Parameter und vom Erreger- (bei elektrisch erregten, vorzugsweise dämpferlosen, Synchronmaschinen) oder Magnetflussraumzeiger $\psi_M$ (bei permanentmagneterregten Synchronmaschinen) bzw. von der Rotorlage (bei Reluktanzmaschinen) bzw. vom Rotorfluss-

raumzeiger $\underline{\psi}_R$ bei Asynchronmaschinen als mehr oder weniger unbekannten Systemzustand abhängt.

Damit genügt bei Synchronmaschinen mit bekannter, vorzugsweise permanentmagnetischer, Erregung im Prinzip eine Stranginduktivitätsmessung, vorzugsweise in jenem Strang, in dem betragsmäßig der größte Statorstrom fließt. Dies entspricht in der komplexen Ebene jener Raumrichtung, in die in etwa der Statorstromraumzeiger zeigt. Unterschreitet diese Stranginduktivität einen Schwellwert, so bildet der Flussraumzeiger $\underline{\psi}_M$ zum Stromraumzeiger i einen Winkel, der im Allgemeinen kleiner 90 Grad ist. Der Stromraumzeiger hat dann eine feldstärkende Komponente, die mitverantwortlich für die Induktivitätsabnahme bzw. die Stromanstiegszunahme im erwähnten Strang ist. Schaltet man aufgrund des Unterschreitens der erwähnten Stranginduktivität nun den Stromraumzeiger um einen gewissen Winkel, z.B. 60 Grad, in Drehrichtung weiter, so wird dadurch der Winkel zwischen Stromraumzeiger und Flussraumzeiger $\underline{\psi}_M$ größer als 90 Grad, der Stromraumzeiger hat nun eine feldschwächende Komponente und die Stranginduktivität entsprechend der Richtung des neuen Stromraumzeigers ist nun wieder größer als die dem Umschaltkriterium entsprechende Induktivität.

Ebenso genügt bei synchron laufenden Maschinen nach dem Reluktanzprinzip eine Stranginduktivitätsmessung analog der oben genannten Synchronmaschine.

Der Vorteil dieser Methode ist, dass sehr hohe Drehmomentausbeuten erzielt werden, weil der Strom immer um seinen optimalen Wert von 90 Grad gegenüber dem Flussraumzeiger $\underline{\psi}_M$ geführt wird. Ein weiterer großer Vorteil ist, dass mit steigendem Strom das Verfahren eher schärfer im Strom-Weiterschaltkriterium wird und daher für hohe Überlasten geeignet ist.

Die anderen Stranginduktivitäten können als unterstützende Informationen, etwa zur Drehrichtungsüberwachung, herangezogen werden.

Bei Asynchronmaschinen sind zwei Systemzustände unbekannt, nämlich der Rotorflussbetrag $|\underline{\psi}_R|$ und der Rotorflusswinkel arg($\underline{\psi}_R$) bezüglich des bekannten Stromraumzeigerwinkels. Als bekannter Parameter gilt der Stromraumzeigerbetrag. Die Strangstreuinduktivitäten bzw. die EMK-bereinigten Stromanstiege hängen nun von diesen unbekannten zwei Systemzuständen und vom Parameter "Stromraumzeigerbetrag" ab. Dieser funktionelle Zusammenhang wird einmal off-line für mehrere Stromraumzeigerbeträge tabellarisch oder als Funktion ermittelt. Somit benötigt man im Echtzeitbetrieb mindestens zwei Strangstreuinduktivitäten zur Ermittlung der zwei unbekannten Systemzustände, weitere Strangstreuinduktivitäten können als zusätzliche Information, etwa zur Flussdrehrichtungsüberwachung, herangezogen werden.

Somit kann der aktuelle Rotorflussraumzeiger ermittelt werden. Ist dieser betragsmäßig kleiner als ein Sollwert, beispielsweise wegen zu geringer Magnetisierung, so ist der neu auszuwählende Stromraumzeiger mit einer größeren rotorflussparallelen Stromkomponente als der stationär für den aktuellen Rotorflussraumzeiger nötigen auszuwählen und umgekehrt. Die rotorflussnormale Komponente bestimmt sich gemäß dem Stand der Technik aus einer Drehmomentenvorgabe oder aus einem Drehzahlreglerausgang oder dergleichen. Sinnvollerweise wählt man nun jenen neuen Stromraumzeiger aus, der in seiner flussparallelen Komponente die Forderungen des Flussbetrages und dessen flussnormale Komponente die Forderung der Drehmomentführung erfüllt. Als weitere Einschränkung ist der auszuwählende Stromraumzeiger auf die zugelassenen Beträge und Winkel zu beschränken. Somit verbleiben einige wenige zulässige Stromraumzeiger, die alle Forderungen und Bedingungen erfüllen. Aus diesen wählt man den besten im Sinne eines zu definierenden Gütekriteriums, beispielsweise minimale Kupferverluste, maximale Dynamik etc., nach bekannten Regeln der Optimierung aus.

Somit kann eine streuinduktivitätsgeführte Stromregelung der Asynchronmaschine realisiert werden.

Der Vorteil dieser Methode ist, dass sehr hohe Drehmomentausbeuten erzielt werden, weil der Strom immer um seinen optimalen Wert gegenüber dem Rotorflussraumzeiger $\underline{\psi}_R$ geführt wird. Ein weiterer großer Vorteil ist, dass mit steigendem Strom das Verfahren eher schärfer im Strom-Weiterschaltkriterium wird und daher für hohe Überlasten geeignet ist, was bei bekannten Verfahren nicht der Fall ist.

**Patentansprüche**

**1.** Verfahren zur sensorlosen Regelung einer Drehstrommmaschine, **gekennzeichnet, durch** folgende Schritte:

- Off-line Festlegung diskreter Winkellagen für den Soll-Stromraumzeiger in denen er weitergeschaltet wird,
- Off-line Feststellung der Stromanstiege bezogen auf die jeweils angelegte Spannung in den diskreten Winkellagen, wobei diese als Kriterium für die Weiterschaltung des Soll-Stromraumzeigers verwendet werden, Ermittlung der Stromanstiege während des Betriebes bei Anlegen unterschiedlicher Spannungs-Raumzeiger unter Kompensation der EMK,
- Festlegung des Winkels des Soll-Stromraumzeigers im statorfesten Koordinatensystem und
- Weiterschalten des Soll-Stromraumzeigers unter Heranziehung der EMKbereinigten Stromanstiege.

**2.** Verfahren nach Anspruch 1, **dadurch gekennzeichnet, dass** bei einer synchron laufenden, vorzugsweise permanentmagneterregten, Drehstrommaschine der Soll-Stromraumzeiger bei Durchschreiten eines Stranginduktivitätswertes auf seinen in Drehrichtung gesehen nächsten, vorzugsweise auf diskrete Winkellagen eingeschränkten, Sollwinkel weitergeschaltet wird.

**3.** Verfahren nach Anspruch 1 oder 2, **dadurch gekennzeichnet, dass** die Raumrichtung des zur Stranginduktivitätsmessung herangezogenen Stranges mit der Richtung des aktuellen Sollstromraumzeigers annähernd, vorzugsweise in einer 30-Grad-Umgebung befindend, übereinstimmt.

**4.** Verfahren nach einem oder mehreren der Ansprüche 1 bis 3, **dadurch gekennzeichnet, dass** unter Verwendung des für die dreisträngige synchron laufende, vorzugsweise permanentmagneterregte, Drehstrommaschine off-line ermittelbaren Zusammenhanges

$$
\begin{pmatrix} L1 \\ L2 \\ L3 \end{pmatrix} = \begin{pmatrix} f[\underline{i}, \arg(\underline{\psi}_M)] \\ f[\underline{i} \cdot \exp(-j120°), \arg(\underline{\psi}_M) - 120°] \\ f[\underline{i} \cdot \exp(+j120°), \arg(\underline{\psi}_M) + 120°] \end{pmatrix}
$$

bei bekanntem Stromraumzeiger $\underline{i}$ unter Verwendung der off-line ermittelbaren Funktion f bei mindestens einem on-line vorliegenden Messwert Lk, k=1,2,3 unter Verwendung bekannter Methoden der Mathematik der gemäß einem Gütekriterium optimale Wert $\arg(\underline{\Psi}_M)$ ermittelt wird, der der Rotorlage der synchron laufenden Maschine bestmöglich entspricht, wobei unter $\underline{\Psi}_M$ der von der Erregung, vorzugsweise durch Dauermagnete, hervorgerufene und mit dem Stator verkettete Fluss der synchron laufenden Maschine verstanden wird.

**5.** Verfahren nach einem oder mehreren der Ansprüche 1 bis 3, **dadurch gekennzeichnet, dass** unter Verwendung des für die dreisträngige Reluktanzmaschine off-line ermittelbaren Zusammenhanges

$$
\begin{pmatrix} L1 \\ L2 \\ L3 \end{pmatrix} = \begin{pmatrix} f[\underline{i}, \gamma] \\ f[\underline{i} \cdot \exp(-j120°), \gamma - 120°] \\ f[\underline{i} \cdot \exp(+j120°), \gamma + 120°] \end{pmatrix}
$$

bei bekanntem Stromraumzeiger $\underline{i}$ unter Verwendung der off-line ermittelbaren Funktion f bei mindestens einem on-line vorliegenden Messwert Lk, k=1,2,3 unter Verwendung bekannter Methoden der Mathematik der gemäß einem Gütekriterium optimale Wert $\gamma$ ermittelt wird, der der Rotorlage der Reluktanzmaschine bestmöglich entspricht, wobei unter $\gamma$ die Rotorlage der Reluktanzmaschine verstanden wird.

**6.** Verfahren nach einem oder mehreren der Ansprüche 1 bis 5, **dadurch gekennzeichnet, dass** bei Strangzahlen ungleich drei die Gleichung gemäß Anspruch 4 nach bekannten Methoden der komplexen Rechnung an die entsprechende Strangzahl angepasst wird.

**7.** Verfahren nach einem oder mehreren der Ansprüche 1 bis 6, **dadurch gekennzeichnet, dass** bei nicht gleichartig aufgebauten Wicklungen die Funktion f durch n off-line ermittelbare Funktionen fn, wobei n höchstens der Strangzahl der Maschine entspricht, ersetzt wird und daraus die Rotorposition nach bekannten Methoden der komplexen Rechnung ermittelt wird.

**8.** Verfahren nach einem oder mehreren der Ansprüche 1 bis 7, **dadurch gekennzeichnet, dass** anstelle der Stranginduktivität L der zur Stranginduktivität L verkehrt proportionale EMK-bereinigte Strangstromanstieg verwendet wird.

**9.** Verfahren nach einem oder mehreren der Ansprüche 1 bis 8, **dadurch gekennzeichnet, dass** im motorischem Betrieb bei Unterschreiten eines Grenzwertes der erfassten Stranginduktivität L der Stromraumzeiger um einen in Drehrichtung positiven, vorzugsweise konstanten, Winkel weitergedreht wird.

10. Verfahren nach einem oder mehreren der Ansprüche 1 bis 9, **dadurch gekennzeichnet, dass** im generatorischem Betrieb bei Überschreiten eines Grenzwertes der erfassten Stranginduktivität L der Stromraumzeiger um einen in Drehrichtung positiven, vorzugsweise konstanten, Winkel weitergedreht wird.

11. Verfahren nach einem oder mehreren der Ansprüche 1 bis 3 und 8, **dadurch gekennzeichnet, dass** unter Verwendung des für die dreisträngige Drehstrom-Asynchronmaschine off-line ermittelbaren Zusammenhanges

$$
\begin{pmatrix} L1 \\ L2 \\ L3 \end{pmatrix} = \begin{pmatrix} f[\underline{i}, \arg(\underline{\psi}_R), |\underline{\psi}_R|] \\ f[\underline{i} \cdot \exp(-j120°), \arg(\underline{\psi}_R) - 120°, |\underline{\psi}_R|] \\ f[\underline{i} \cdot \exp(+j120°), \arg(\underline{\psi}_R) + 120°, |\underline{\psi}_R|] \end{pmatrix}
$$

bei bekanntem Stromraumzeiger $\underline{i}$ unter Verwendung der off-line ermittelbaren Funktion f bei mindestens zwei on-line vorliegenden Messwerten Lk, Lj; k=1,2,3, j=1,2,3, j≠k unter Verwendung bekannter Methoden der Mathematik das gemäß einem Gütekriterium optimale Wertepaar {arg($\underline{\Psi}_R$), |$\underline{\Psi}_R$|} zur Beschreibung des Flusswinkels und des Flussniveaus in der Maschine ermittelt wird, wobei unter $\underline{\Psi}_R$ vorzugsweise die Rotorflussverkettung verstanden wird.

12. Verfahren nach einem oder mehreren der Ansprüche 1 bis 11, **dadurch gekennzeichnet, dass** bei Asynchronmaschinen die Stromraumzeigerführung so durchgeführt wird, dass die rotorflussparallele Komponente des Stromraumzeigers
vom Flussbetrag |$\underline{\Psi}_R$| und die rotorflussnormale Komponente des Stromraumzeigers vom geforderten Drehmoment abgeleitet wird.

13. Verfahren nach einem oder mehreren der Ansprüche 1 bis 12, **dadurch gekennzeichnet, dass** die elektrische Maschine als Linearmaschine ausgeführt ist.

14. Verfahren nach einem oder mehreren der Ansprüche 1 bis 13, **dadurch gekennzeichnet, dass** die elektrische Maschine als rotierende Maschine ausgeführt ist.

15. Verfahren nach einem oder mehreren der Ansprüche 1 bis 14, **dadurch gekennzeichnet, dass** die Stromanstiegsmessungen zur Bestimmung von Induktivitätsparametern aus Strommesselementen, die zwischen dem Phasenabgang der Wechselrichterbrückenzweige und dem Zwischenkreiskondensator angeordnet sind, gewonnen werden.

16. Verfahren nach einem oder mehreren der Ansprüche 1 bis 14, **dadurch gekennzeichnet, dass** die Stromanstiegsmessungen zur Bestimmung von Induktivitätsparametern aus Strommesselementen, die zwischen dem Phasenabgang der Wechselrichterbrückenzweige und dem Maschinenanschluss angeordnet sind, gewonnen werden.

17. Verfahren nach einem oder mehreren der Ansprüche 1 bis 16, **dadurch gekennzeichnet, dass** bei dreiphasigen Wechselrichtern in gewisser zeitlicher Abfolge nur zwei Brückenzweige Strom führen und der dritte gesperrt ist.

**Claims**

1. Method for sensorless regulation of a three-phase machine, **characterised by** the following steps:

   - off-line definition of discrete angle positions for the nominal current vector in which it is relayed,
   - off-line determination of the current increases related to the relevant voltage applied in the discrete angle positions, whereby these are used as criterion for relaying of the nominal current vector,
   - determination of the current increases during operation in the case that different voltage vectors are applied under compensation of the electromotive force,

- definition of the angle of the nominal current vector in the stator fixed coordinate system, and
- relaying of the nominal current vector by using the current increases cleared from the electromotive force.

2. Method in accordance with Claim 1, **characterised by** the fact that on a synchronous, preferably permanent magneto-driven three-phase machine, the nominal current vector is relayed to the next nominal angle looking in the direction of rotation upon passing through a branch inductance value, whereby the nominal angle is preferably limited to discrete angle positions.

3. Method in accordance with Claim 1 or 2, **characterised by** the fact that the spatial direction of the branch used for measurement of the branch inductance corresponds approximately, preferably located within a 30 degree neighbourhood, with the direction of the current nominal current vector.

4. Method in accordance with one or more of Claims 1 to 3, **characterised by** the fact that using the interrelation determinable off-line for the three-phase synchronous, preferably permanent magneto-driven three-phase machine

$$\begin{pmatrix} L1 \\ L2 \\ L3 \end{pmatrix} = \begin{pmatrix} f[\underline{i}, \arg(\underline{\psi}_M)] \\ f[\underline{i} \cdot \exp(-j120°), \arg(\underline{\psi}_M) - 120°] \\ f[\underline{i} \cdot \exp(+j120°), \arg(\underline{\psi}_M) + 120°] \end{pmatrix}$$

the optimum value $\arg(\underline{\Psi}_M)$ that best possibly corresponds with the rotor position of the synchronous machine pursuant to a quality criterion is determined for a known current vector $\underline{i}$ using the function f that is determinable off-line and in the case of at least one measured value Lk, k=1,2,3 that is available on-line using known mathematical methods, whereby $\underline{\Psi}_M$ is understood as the flow of the synchronous machine that is caused by the excitation, preferably caused by permanent magnets, and which is interlinked with the stator.

5. Method in accordance with one or more of Claims 1 to 3, **characterised by** the fact that using the interrelation determinable off-line for the three-phase reluctance machine

$$\begin{pmatrix} L1 \\ L2 \\ L3 \end{pmatrix} = \begin{pmatrix} f[\underline{i}, \gamma] \\ f[\underline{i} \cdot \exp(-j120°), \gamma - 120°] \\ f[\underline{i} \cdot \exp(+j120°), \gamma + 120°] \end{pmatrix}$$

the optimum value $\gamma$ that best possibly corresponds with the rotor position of the reluctance machine pursuant to a quality criterion is determined for a known current vector $\underline{i}$ using the function f that is determinable off-line and in the case of at least one measured value Lk, k=1,2,3 that is available on-line using known mathematical methods, whereby $\gamma$ is understood as the rotor position of the reluctance machine.

6. Method in accordance with one or more of Claims 1 to 5, **characterised by** the fact that the equation in accordance with Claim 4 is adapted to the relevant number of branches pursuant to known methods of complex computation in the case that the number of branches is unequal to three.

7. Method in accordance with one or more of Claims 1 to 6, **characterised by** the fact that in the case of unequally structured windings, the function f is replaced by n functions fn that are determinable off-line, whereby n is equivalent to the number of branches of the machine at the most, and the rotor position is determined in accordance with known methods of complex computation.

8. Method in accordance with one or more of Claims 1 to 7, **characterised by** the fact that instead of the branch inductance L, the e.m.f.-cleared branch current increase that is inversely proportional to the branch inductance L is used.

9. Method in accordance with one or more of Claims 1 to 8, **characterised by** the fact that during motor-driven operation, the current vector is rotated further by a preferably constant angle that is positive to the direction of rotation in the case that the limit value of the recorded branch inductance L is undercut.

10. Method in accordance with one or more of Claims 1 to 9, **characterised by** the fact that during generator operation, the current vector is rotated further by a preferably constant angle that is positive to the direction of rotation in the case that a limit value of the recorded branch inductance L is exceeded.

11. Method in accordance with one or more of Claims 1 to 3 and 8, **characterised by** the fact that using the interrelation determinable off-line for the three-phase asynchronous machine

$$\begin{pmatrix} L1 \\ L2 \\ L3 \end{pmatrix} = \begin{pmatrix} f[\underline{i}, \arg(\underline{\psi}_R), |\underline{\psi}_R|] \\ f[\underline{i} \cdot \exp(-j120°), \arg(\underline{\psi}_R) - 120°, |\underline{\psi}_R|] \\ f[\underline{i} \cdot \exp(+j120°), \arg(\underline{\psi}_R) + 120°, |\underline{\psi}_R|] \end{pmatrix}$$

the optimum value pairs $\{\arg(\underline{\Psi}_R), |\underline{\Psi}_R|\}$ for the description of the flow angle and the flow level in the machine pursuant to a quality criterion are determined for a known current vector $\underline{i}$ using the function f that is determinable off-line and in the case of at least two measured values Lk, Lj; k=1,2,3, j=1,2,3, j≠k that are available on-line using known mathematical methods, whereby $\underline{\Psi}_R$ is preferably understood as the interlinking of the rotor flow.

12. Method in accordance with one or more of Claims 1 to 11, **characterised by** the fact that on asynchronous machines, the current vector guidance is implemented in such a way that the current vector component in parallel to the rotor flow is derived from the flow value $|\underline{\Psi}_R|$ and the current vector component normal to the rotor flow is derived from the required turning moment.

13. Method in accordance with one or more of Claims 1 to 12, **characterised by** the fact that the electric machine is designed as a linear machine.

14. Method in accordance with one or more of Claims 1 to 13, **characterised by** the fact that the electric machine is designed as a rotating machine.

15. Method in accordance with one or more of Claims 1 to 14, **characterised by** the fact that the current increase measurements for the determination of inductance parameters are obtained by ammeter elements, which are located between the phase outlet of the inverter bridge branches and the intermediate circuit capacitor.

16. Method in accordance with one or more of Claims 1 to 14, **characterised by** the fact that the current increase measurements for the determination of inductance parameters are obtained by ammeter elements, which are located between the phase outlet of the inverter bridge branches and the machine connection.

17. Method in accordance with one or more of Claims 1 to 16, **characterised by** the fact that in the case of three-phase inverters, only two bridge branches carry current and the third one is blocked in a specific chronological order.

**Revendications**

1. Procédé pour le réglage sans capteur d'une machine triphasée, **caractérisé par** les étapes suivantes:

   - détermination hors-ligne des positions relatives discrètes du vecteur du courant nominal, dans lesquelles il sera commuté ;
   - détermination hors-ligne des montées du courant, rapportée au voltage appliqué dans les positions relatives discrètes, en tenant compte de ces dernières en tant que critères pour la commutation du vecteur de courant nominal;

- détermination des montées du courant pendant l'opération, lors de l'application de différents vecteurs de voltage en compensant la force électromotrice ;
- détermination de l'angle du vecteur du courant nominal dans le système de coordonnées à stator fixe, et
- commutation du vecteur du courant nominal en utilisant les montées du courant, nettes de la force électromotrice.

2. Procédé selon la revendication (1), **caractérisé par le fait que** pour une machine triphasée, marchant en synchronisme, de préférence à incitation par aimant permanent, le vecteur du courant nominal sera commuté pour atteindre son angle nominal suivant vu du sens de la rotation, lorsqu'il passera par une valeur d'inductance de branche, l'angle suivant étant de préférence limité aux positions relatives discrètes.

3. Procédé selon les revendications ou 2, **caractérisé par le fait que** l'orientation dans l'espace de la branche utilisée pour mesurer l'inductance de la branche est plus ou moins conforme à celle du vecteur du courant nominal, et ceci de préférence dans un environnement de 30°.

4. Procédé selon une ou plusieurs revendications 1 à 3, **caractérisé par le fait qu'**en utilisant l'équation suivante, déterminable hors-ligne pour la machine triphasée marchant en synchronisme, à trois phases, excitée de préférence par un aimant permanent,

$$\begin{pmatrix} L1 \\ L2 \\ L3 \end{pmatrix} = \begin{pmatrix} f[\underline{i}, \arg(\underline{\psi}_M)] \\ f[\underline{i} \cdot \exp(-j120°), \arg(\underline{\psi}_M) - 120°] \\ f[\underline{i} \cdot \exp(+j120°), \arg(\underline{\psi}_M) + 120°] \end{pmatrix}$$

la valeur optimum $\arg(\underline{\Psi}_M)$ soit déterminée pour un vecteur de courant $\underline{i}$ en utilisant la fonction f déterminable hors ligne et en utilisant les méthodes mathématiques connues, et pour au moins une valeur Lk, k=1,2,3 disponible en ligne, laquelle valeur optimum correspond le mieux à la position du rotor de la machine marchant en synchronisme, $\underline{\Psi}_M$ représentant le flux lié au stator, provoqué de préférence par des aimants permanents, de la machine marchant en synchronisme.

5. Procédé selon une ou plusieurs revendications 1 à 3, **caractérisé par le fait qu'**en utilisant l'équation déterminable hors ligne pour la machine à réluctance triphasée,

$$\begin{pmatrix} L1 \\ L2 \\ L3 \end{pmatrix} = \begin{pmatrix} f[\underline{i}, \gamma] \\ f[\underline{i} \cdot \exp(-j120°), \gamma - 120°] \\ f[\underline{i} \cdot \exp(+j120°), \gamma + 120°] \end{pmatrix}$$

pour un vecteur de courant connu $\underline{i}$ et en utilisant la fonction f déterminable hors ligne, ainsi que pour au moins une valeur, disponible en ligne, Lk, k=1,2,3, la valeur optimum $\gamma$ soit déterminée en utilisant les méthodes mathématiques, laquelle valeur correspond le mieux à la position du rotor dans une machine à réluctance, $\gamma$ représentant la position du rotor dans la machine à réluctance.

6. Procédé selon une ou plusieurs revendications 1 à 5, **caractérisé par le fait que** pour des nombres de branches inégaux à 3, l'équation conforme à la revendication 4 est adaptée au nombre de branches correspondant selon les méthodes connues du calcul complexe.

7. Procédé selon une ou plusieurs revendications 1 à 6, **caractérisé par le fait que** pour des bobines à structure non identique, la fonction f est remplacée par n fonctions fn, déterminables hors-ligne, n correspondant au nombre de phases de la machine, remplacement qui sert à calculer la position du rotor selon les méthodes connues du calcul complexe.

8. Procédé selon une ou plusieurs revendications 1 à 7, **caractérisé par le fait qu'**à la place de l'inductance de phase L, on utilisera la montée du courant de la phase inversement proportionnel à l'inductance de phase L, nette de la force électromotrice.

9. Procédé selon une ou plusieurs revendications 1 à 8, **caractérisé par le fait que** dans l'opération motrice, en cas de sous-dépassement d'une valeur limite de l'inductance L saisie, le vecteur est commuté selon un angle positif dans le sens de la rotation, et de préférence constant.

10. Procédé selon une ou plusieurs revendications 1 à 9, **caractérisé par le fait que** pendant l'opération génératrice et en cas d'un sous-dépassement d'une valeur limite de l'inductance de la phase L, le vecteur est commuté selon un angle positif dans le sens de la rotation, et de préférence constant.

11. Procédé selon une ou plusieurs revendications 1 à 3 et 8, **caractérisé par le fait qu'**en utilisant l'équation applicable à la machine asynchrone triphasée à trois phases

$$
\begin{pmatrix} L1 \\ L2 \\ L3 \end{pmatrix} = \begin{pmatrix} f[\underline{i}, \arg(\underline{\psi}_R), |\underline{\psi}_R|] \\ f[\underline{i}\cdot\exp(-j120°), \arg(\underline{\psi}_R)-120°, |\underline{\psi}_R|] \\ f[\underline{i}\cdot\exp(+j120°), \arg(\underline{\psi}_R)+120°, |\underline{\psi}_R|] \end{pmatrix}
$$

pour un vecteur de courant connu $\underline{i}$ en utilisant la fonction f déterminable hors-ligne pour au moins deux valeurs disponibles en ligne Lk, Lj; k=1,2,3, j=1,2,3, j≠k, en utilisant les méthodes mathématiques connues, le couple optimum de valeurs {arg($\underline{\Psi}_R$), |$\underline{\Psi}_R$| } permettant de décrire l'angle et le niveau du flux dans la machine est déterminé, $\underline{\Psi}_R$ représentant l'enchaînement des flux du rotor.

12. Procédé selon une ou plusieurs revendications 1 à 11, **caractérisé par le fait que** le guidage des vecteurs des machines asynchrones est mis en oeuvre de sorte que la composante parallèle au flux du rotor soit dérivé du montant du flux |$\underline{\Psi}_R$|, et que la composante verticale par rapport au flux du rotor soit dérivé du couple moteur requis.

13. Procédé selon une ou plusieurs revendications 1 à 12, **caractérisé par le fait que** la machine électrique est exécutée sous la forme d'une machine linéaire.

14. Procédé selon une ou plusieurs revendications 1 à 13, **caractérisé par le fait que** la machine électrique est exécutée sous la forme d'une machine en rotation.

15. Procédé selon une ou plusieurs revendications 1 à 14, **caractérisé par le fait que** les mesurages de la montée du courant pour déterminer les paramètres d'inductance correspondent aux éléments de mesure du courant présents entre le déclin de la phase des branches du pont de l'onduleur et le condensateur du circuit intermédiaire.

16. Procédé selon une ou plusieurs revendications 1 à 14, **caractérisé par le fait que** les mesurages de la montée du courant pour déterminer les paramètres d'inductance correspondent aux éléments de mesure du courant présents entre le déclin de la phase des branches du pont de l'onduleur et le raccord de la machine.

17. Procédé selon une ou plusieurs revendications 1 à 16, **caractérisé par le fait que** dans les onduleurs triphasés, seulement deux phases du pont sont traversés par le courant, la troisième étant bloquée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5982117 A
- US 5786681 A

- AT 406722

**In der Beschreibung aufgeführte Nicht-Patentliteratur**

- **Tursini, M. et al.** Initial rotor position estimation method for PM motors. *IEEE Transaction on Industry Applications,* 2003, vol. 39 (6), 1630-1640